# EUROPEAN PATENT SPECIFICATION

(11) **EP 1 714 896 B1**
(45) Date of publication and mention of the grant of the patent: **07.03.2012**
(21) Application number: 05709858.4
(22) Date of filing: 08.02.2005
(51) Int. Cl.: B65D 39/18, B65D 39/04, B29C 51/12, B29C 63/04, B29C 65/40

(54) **PLUG FOR CONTAINER AND METHOD OF MANUFACTURING THE SAME**
STOPFEN FÜR BEHÄLTER UND VERFAHREN ZUR HERSTELLUNG DESSELBEN
BOUCHON POUR UN RÉCIPIENT ET PROCÉDÉ DE FABRICATION DE CELUI-CI

(30) Priority: 13.02.2004 JP 2004036540
(43) Date of publication of application: 25.10.2006
(73) Proprietor: Suntory Holdings Limited, Kita-ku, Osaka-shi, Osaka 530-8203 (JP); UCHIYAMA MANUFACTURING CORP., Okayama-shi, Okayama 702-8004 (JP)
(72) Inventor: KISHI, Shigenobu c/o SUNTORY LIMITED, Minato-ku, Tokyo 1078430 (JP); OKAMOTO, Masaru, Okayama-shi, Okayama 7028004 (JP); FUJIMOTO, Katsuya, Okayama-shi, Okayama 7028004 (JP)
(74) Representative: Lemcke, Brommer & Partner
(86) International application number: PCT/JP2005/001806
(87) International publication number: WO 2005/077775

(56) References cited:
- WO-A-03/074379
- WO-A1-03/031276
- WO-A2-02/22453
- WO-A2-03/074379
- JP-A- 5 124 665
- JP-A- 5 124 665
- JP-A- 2003 334 234

## Description

The present invention relates to a container stopper according to the preamble of claim 1, and a manufacturing method therefor according to the preamble of claim 5, in which a liquid-contact surface and an outer peripheral surface continuous with the liquid-contact surface of a core formed of an elastic material are coated with a synthetic resin skin.

### [Background Art]

As stoppers used for containers of whiskey and wine, for example, compressed cork stoppers, which are formed by blending an adhesive to cork grain made to an appropriate grain size, then heating and pressurizing it to form a compressed cork plate or compressed cork material, and punching or cutting it to a desired shape, and natural cork stoppers, are widely used conventionally
However, with the conventional cork stoppers, although surface treatment is done with wax, silicone oil or the like, the cork is in a bare state. Therefore, when the cork is contaminated by mold smelling substances, typically trichloro-anisole (TCA), they could diffuse into the whiskey or wine in the containers to spoil the taste of the contents. In addition, cork dust could fall into the contents.
Furthermore, the contents could soak into the cells of the cork to discolor the outer surfaces of the cork stoppers. Where the contents contain alcohol, lignin and suberin which are components of the cork could diffuse to the alcohol, causing the cork stoppers to become "thin", thereby lowering their physical strength and sealing effect.

Then, there has been proposed a container stopper in which a liquid-contact surface and an outer peripheral surface continuous with the liquid-contact surface of a core formed of a natural cork or compressed cork are coated with a synthetic resin skin (see e.g. Japanese Utility Model Application "Kokai" No. 59-112746, referred to as Patent Document 1 hereinafter).
Also, a container stopper has been proposed in which the liquid-contact surface and the outer peripheral surface continuous with the liquid-contact surface of the cork core are coated with a polyethylene skin and only the liquid-contact portion of the polyethylene skin is coated with a circular sheet made of polyethylene terephthalate (see e.g. Japanese Patent No. 2973249, referred to as Patent Document 2 hereinafter).

Further, a container stopper has been proposed in which a liquid-contact surface and an outer peripheral surface continous with the liquid-contact surface of a core formed of an natural cork material are coated with a thin synthetic resin film. A second synthetic resin film is bonded to that first synthetic resin film over a part of the outer peripheral surface and the liquid-contact surface (cf. Japanese Patent Application JP05 124665 A).

### [Disclosure of the Invention]

### [Problem to Be Solved by Invention]

According to these conventional techniques, the above-mentioned problems such as of trichloro-anisole contained in the cork diffusing into the contents and the falling of cork dust are avoided. However, with the conventional technique described in Patent Document 1, there are disclosed no further problems or solutions therefor. Also, with the conventional technique described in Patent Document 2, the flavor of the contents could be spoiled by various types of smells entering from outside the container or by absorption or adsorption of the flavor of the contents.

That is, in the case of the conventional technique described in Patent Document 2, although the liquid-contact surface of the core is coated with a sheet of polyethylene terephthalate, the outer peripheral surface of the core, i.e. the portion that contacts the inner peripheral surface of the opening of the container, is coated with a skin of polyethylene. Since polyethylene is porous and has a property of absorbing and adsorbing smell, when stored in a warehouse, closed or the like, mold smelling substances, typically TCA, present in such an environment, and smell components such as naphthalene contained in an insecticide, could pass between the inner peripheral surface of the opening of the container and the stopper to be absorbed or adsorbed by the polyethylene to adversely affect the taste of the contents with the progress of time. Conversely, the flavor of the contents may be absorbed or adsorbed by the polyethylene, which would adversely affect the taste of the contents. There is room for improvement in this respect.

Naturally, a container stopper, when inserted into the opening of a container, is required to have a function for completely preventing leakage of the contents. However, where only the outer peripheral surface of the core is coated with a skin of polyethylene terephthalate to solve the above-noted problem, a reduction in diameter of the core inserted into the opening of the container results in "creases" being formed on the skin of polyethylene terephthalate covering the peripheries. The "creases" become a cause of leakage of the contents.

This invention has been made having regard to the disadvantages of the prior art noted above, and its object is to provide a container stopper, and a manufacturing method therefor, capable of reliably preventing adverse influences of various smells entering from outside the container and absorption and adsorption of the flavor of the content, as well as preventing adverse influences of a core such as cork.

### [Solutions]

According to the present invention, a container stopper comprises the features defined in claim 1, in particular a core formed of an elastic material and having a liquid-contact surface and an outer peripheral surface continuous with the liquid-contact surface, the liquid-contact surface and the outer peripheral surface being coated with a skin made of a synthetic resin, wherein said skin is a polyester skin made of a polyester resin or a synthetic resin having a polyester resin as a main component thereof, and the polyester skin is bonded to the liquid-contact surface and the outer peripheral surface of said core through a polyethylene bonding layer formed of a polyethylene resin or having a polyethylene resin as a main component thereof; and said polyethylene bonding layer has a thickness of 80 to 300 µm at a center portion of the liquid-contact surface, a thickness of 70 to 100 µm at an outer peripheral portion of the outer peripheral surface adjacent the liquid-contact surface and a thickness of 30 to 300 µm over the entire liquid-contact surface.

With these features of the present invention, the liquid-contact surface and the outer peripheral surface continuous with the liquid-contact surface of the core formed of an elastic material are coated with a polyester skin made of a polyester resin or a synthetic resin having a polyester resin as a main component thereof. Even where cork is used as the core, there is no possibility of undergoing adverse influences of the core, or adversely affecting the core itself, such as the taste of the contents being spoiled by diffusion of trichloro-anisole contained in the cork. Unlike polyethylene, the polyester resin does not have a property of absorbing or adsorbing smells, and can therefore prevent adverse influences on the contents by entry of various smells from outside the container and absorption and adsorption of the flavor of the contents.

And, since the polyester skin is bonded to the liquid-contact surface and the outer peripheral surface of said core through a bonding layer formed of a polyethylene resin or having a polyethylene resin as a main component thereof, the core and the polyester skin are completely integrated. Even if the core reduces in diameter when inserted into the opening of the container, the polyester skin follows the core to shrink alike, thereby avoiding "creases".

Since said polyethylene bonding layer has a thickness of 80 to 300 µm at a center portion of the liquid-contact surface, a thickness of 70 to 100 µm at an outer peripheral portion of the outer peripheral surface adjacent the liquid-contact surface and a thickness of 30 µm or more over the entire liquid-contact surface, as will be detailed later, even where cork is used as the core and there exist fine recesses unique to cork in the surface of the cork core, in particular, in the liquid-contact surface, it is possible to avoid formation of pinholes in the polyester skin due to such recesses, and "creases" in the outer peripheral surface of the core can be reliably avoided also.

As a result, the liquid-contact surface and the outer peripheral surface of the core may be coated with the skin made of a polyester resin without impairing the functions required of the container stopper. This prevents adverse influences on the contents by entry of various smells from outside the container and absorption and adsorption of the flavor of the contents, as well as adverse influences of the core, as noted hereinbefore. Even where the content includes alcohol, alcohol barrier characteristics of the polyester resin can prevent diffusion of core components to alcohol, to prevent a volume reduction of the core.

The "synthetic resin having a polyester resin as a main component thereof" herein does not mean that, for example, the polyester resin included is in 50% or more, but means that the polyester resin is included in an amount sufficient for the above-noted functions and effects to be expected. This also applies to the description "polyethylene bonding layer having a polyethylene resin as a main component thereof". That is, this means that the ethylene resin is included in an amount sufficient for the above-noted functions and effects to be expected.

According to a preferred feature of the present invention, in the container stopper described above, the thickness of said polyethylene bonding layer at the center portion of the liquid-contact surface layer is 10 µm or more greater than the thickness of the polyethylene bonding layer at the outer peripheral portion.

That is preferred according to the present invention, since the thickness of said polyethylene bonding layer is 10 µm or more greater than the thickness of the polyethylene layer at the outer peripheral portion, as will become apparent from experiment results to be described later, as long as such condition is met, even where there exist fine recesses in the surface of the cork core, it is possible to avoid more reliably formation of pinholes in the polyester skin due to such recesses, and "creases" in the outer peripheral surface of the core can be reliably avoided also.

According to a further preferred feature of the present invention, in the container stopper described above, the polyethylene bonding layer at the liquid-contact surface comprises two layers and the polyethylene bonding layer at the outer peripheral surface comprises one layer.

With that preferred feature of the present invention, since the polyethylene bonding layer at the liquid-contact surface comprises two layers, even where there exist fine recesses in the surface of the cork core, the polyethylene bonding layer on the inner side will enter the recesses and the polyethylene bonding layer on the outer side will provide the original function as the bonding layer. Therefore, it is possible to avoid more reliably formation of pinholes in the polyester skin due to such recesses, and the polyester skin can be reliably bonded to the liquid-contact surface of the core.
And, since the polyethylene bonding layer at the outer peripheral surface comprises one layer, "creases" in the outer peripheral surface of the core can be reliably avoided and at the same time the polyester skin can be reliably bonded to the outer peripheral surface of the core.

According to a further preferred feature of the present invention, in the container stopper described above, said polyester skin is a skin made of polyethylene terephthalate.

With that preferred feature of the present invention, said polyester skin is a skin made of polyethylene terephthalate. Polyethylene terephthalate has a very high barrier performance, and can further reduce the possibility of adverse influences of the core and adverse influences on the core itself.

According to the present invention it is further provided a method of manufacturing a container stopper according to claim 5.

With that method according to the present invention, a synthetic resin film of a polyester resin or a synthetic resin having a polyester resin as a main component thereof is used as the skin for coating the liquid-contact surface and the outer peripheral surface continuous with the liquid-contact surface of the core formed of an elastic material. Therefore, as described above, it is possible to prevent adverse influences on the contents by entry of various smells from outside the container and absorption and adsorption of the flavor of the contents.
The polyester film is stretched, and the core is press-fit in a heated state for extension. The film of a polyester resin or a synthetic resin having a polyester resin as a main component thereof is coated in contact with and firmly on the liquid-contact surface and outer peripheral surface of the core. Hence, the polyester film as the skin of the container stopper can be firmly bonded to the liquid-contact surface and the outer peripheral surface of the core.
In addition, since the polyethylene bonding layer for boding the polyester film to the core has a greater thickness at a portion thereof corresponding to the liquid-contact surface than the other portions, as described hereinbefore, even where there exist fine recesses in the liquid-contact surface of the core, only a portion of the polyethylene bonding layer corresponding to the liquid-contact surface will enter the recesses and the polyester film as the skin will be free from formation of pinholes in the liquid-contact surface or "creases" in the outer peripheral face, so that the film can be firmly bonded to the core.

As a result, as described hereinbefore, the liquid-contact surface and the outer peripheral surface of the core may be coated with the skin made of a polyester resin without impairing the functions required of the container stopper. This prevents adverse influences on the contents by entry of various smells from outside the container and absorption and adsorption of the flavor of the contents, as well as adverse influences of the core, as noted hereinbefore. Even where the content includes alcohol, alcohol barrier characteristics of the polyester resin can prevent diffusion of core components to alcohol, to prevent a volume reduction of the core.

According to a further preferred feature of the present invention, in the method of manufacturing a container stopper described above, a polyester skin having a skin-side polyethylene adhesion forming layer bonded to an inner surface thereof is used as said skin, and a core having a core-side polyethylene adhesion forming layer bonded to a liquid-contact surface and an outer peripheral surface thereof is used as said core, said skin-side and core-side polyethylene adhesion forming layers being integrated by thermal fusion to form said polyethylene bonding layer.

With that preferred feature of the present invention, a polyester skin having a skin-side polyethylene adhesion forming layer bonded to an inner surface thereof is used as said skin, and a core having a core-side polyethylene adhesion forming layer bonded to a liquid-contact surface and an outer peripheral surface thereof is used as said core, said skin-side and core-side polyethylene adhesion forming layers being integrated by thermal fusion to form said polyethylene bonding layer. Therefore, the bonding between the core and the polyester skin can be effected more reliably.
For example, where natural cork or compressed cork is used as the core, a polyester resin does not necessarily have good adhesion to the cork. By bonding polyethylene adhesion forming layers to the cork core and the polyester skin beforehand, and integrating the two adhesion forming layers by thermal fusion, even where the core is formed of cork, the core and the polyester skin are bonded reliably.

According to a further preferred feature of the present invention, in the method of manufacturing a container stopper described above, the core-side polyethylene adhesion forming layer comprises at least two films including a first film corresponding to the liquid-contact surface and a second film corresponding to the liquid-contact surface and the outer peripheral face.

With that preferred feature of the present invention, the core-side polyethylene adhesion forming layer comprises at least two films including a first film corresponding to the liquid-contact surface and a second film corresponding to the liquid-contact surface and the outer peripheral face. Therefore, even where there exist fine recesses in the liquid-contact surface of the core, the first film will enter the recesses whereas the second film can provide its original function as the bonding layer. Therefore, it is possible to avoid formation of pinholes in the polyester skin in the liquid-contact surface and to avoid formation of "creases" in the outer peripheral face of the core, and the polyester skin can be reliably bonded to the outer peripheral face of the core.

According to a further preferred feature of the present invention, in the method of manufacturing a container stopper described above, after the first film is bonded to the liquid-contact surface of the core, the second film is bonded to the liquid-contact surface and the outer peripheral surface of the core, thereby to form the core-side polyethylene adhesion forming layer.

With that preferred feature of the present invention, since the first film is bonded first to the liquid-contact surface of the core, the first film can be fixed in position in a reliable manner relative to the liquid-contact surface. And, as the second film is bonded subsequently to the core to which the first film has been bonded, the core-side polyethylene adhesion forming layer can be formed reliably. Further, since the bonded portion between the first film and the second film does not appear at the thermally fused portion between the core-side polyethylene adhesion forming layer and the skin-side polyethylene adhesion forming layer, the thermal fusion between the skin-side polyethylene adhesion forming layer and the core-side polyethylene adhesion forming layer can take place more integral manner. As a result, bonding between the core and the polyester skin can be even more reliable.

According to a further preferred feature of the present invention, in the method of manufacturing a container stopper described above, a polyester skin having the skin-side adhesion forming layer of polyethylene bonded to an inner surface thereof by a dry laminate method is used as said skin.

With that preferred feature of the present invention, since a polyester skin having the skin-side adhesion forming layer of polyethylene bonded to an inner surface thereof by a dry laminate method is used as said skin, the polyester skin and the skin-side adhesion forming layer are bonded reliably and firmly. As a result, the polyester skin and the core are bonded reliably and firmly.

### [Brief Description of the Drawings]

Fig. 1 is an exploded perspective view of a stopper for whiskey,
Fig. 2 is a view, partly in section, of the stopper for whiskey,
Fig. 3 is an enlarged sectional view of a principal portion of the stopper for whiskey,
Fig. 4 is a sectional view of a film used in the manufacture of the stopper of whiskey,
Fig. 5 is a sectional view showing a process of manufacturing the stopper for whiskey,

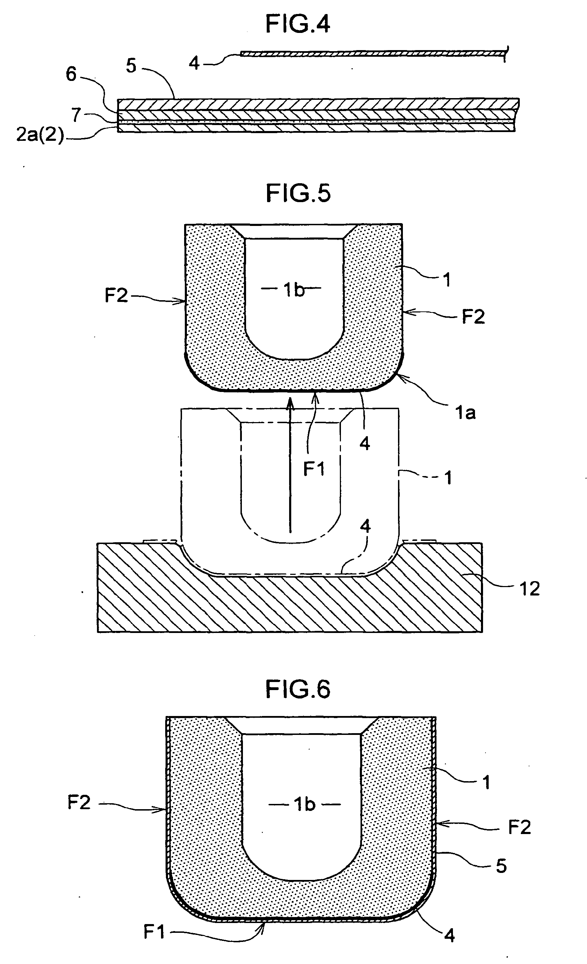

Fig. 5 is a sectional view showing the process of manufacturing the stopper for whiskey,
Fig. 6 is a sectional view showing the process of manufacturing the stopper for whiskey,

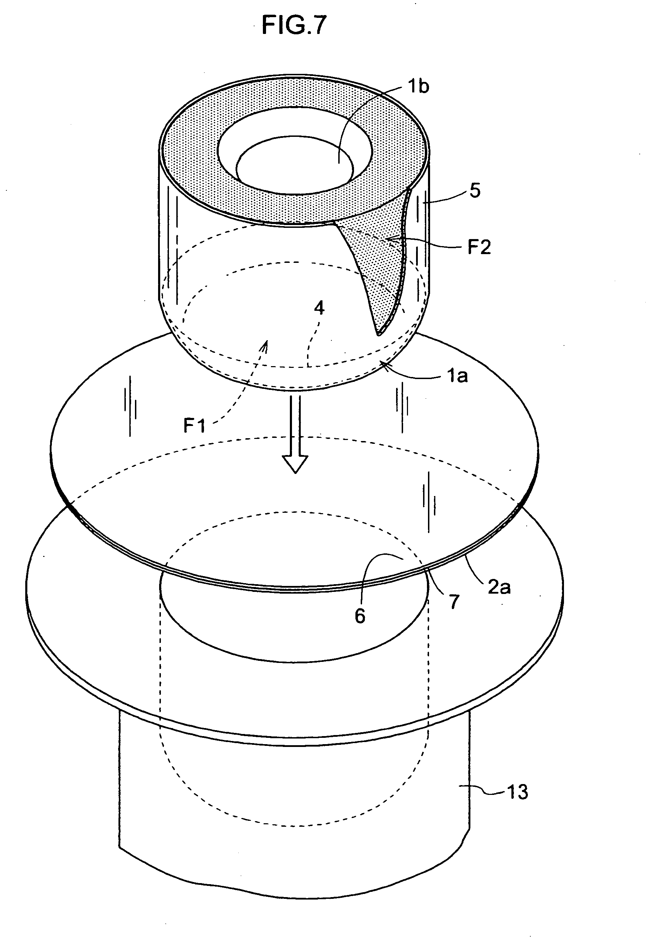

Fig. 7 is a perspective view showing the process of manufacturing the stopper for whiskey,

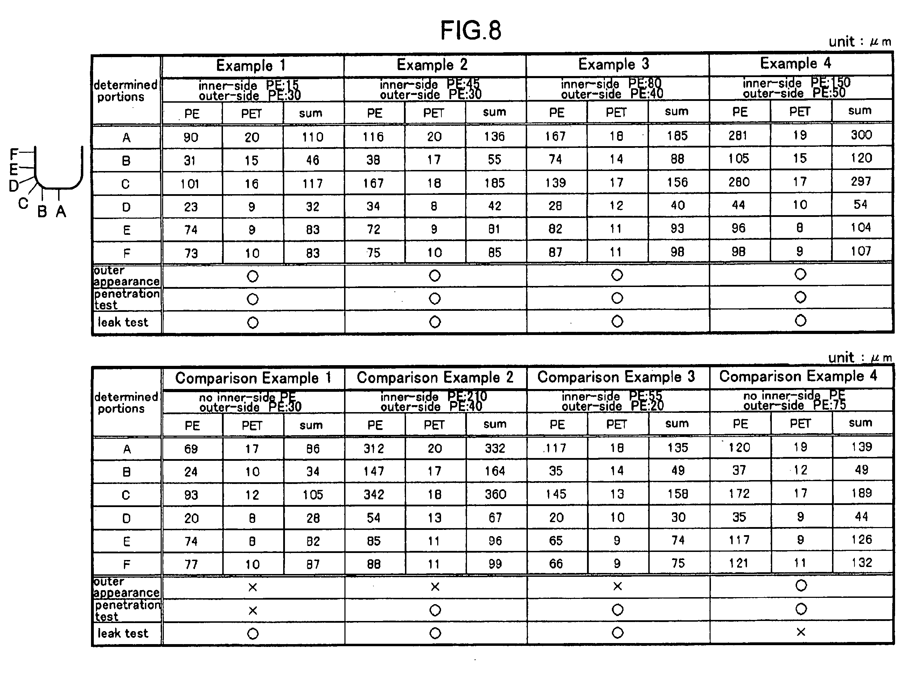

Fig. 8 is a table showing results of experiments conducted for confirming the effects,

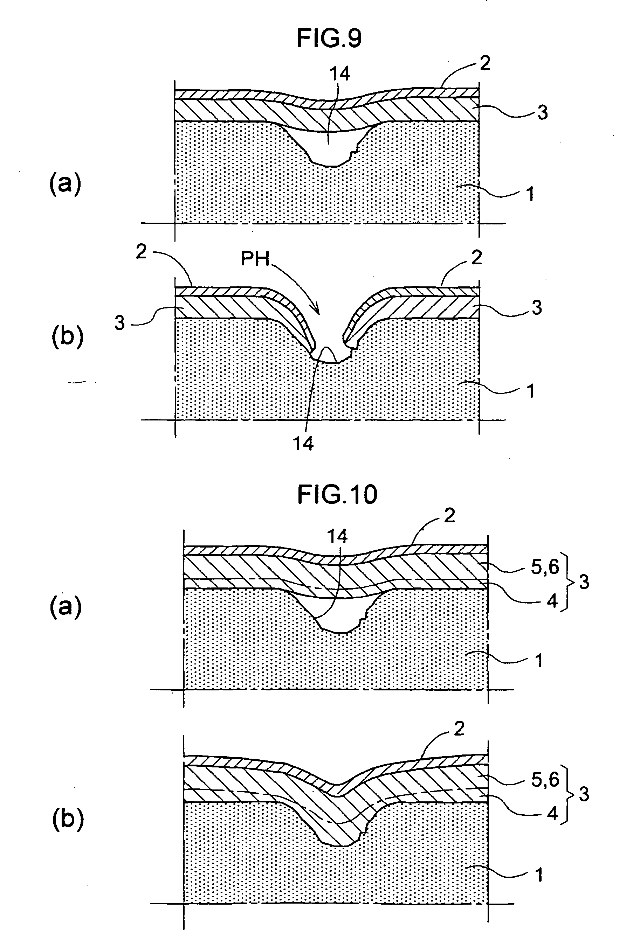

Fig. 9 is a diagram illustrating a mechanism by which pinholes are formed, and
Fig. 10 is a diagram illustrating a mechanism by which pinholes are not formed.

### [Best Mode of Embodying the Invention]

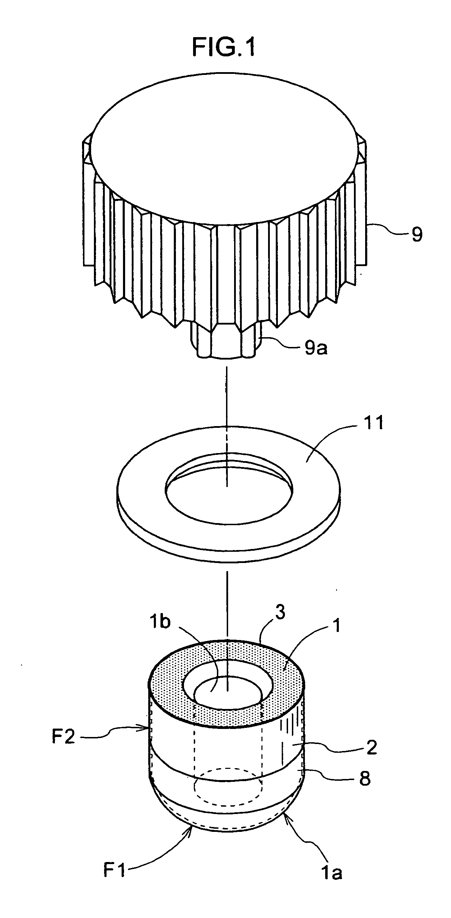

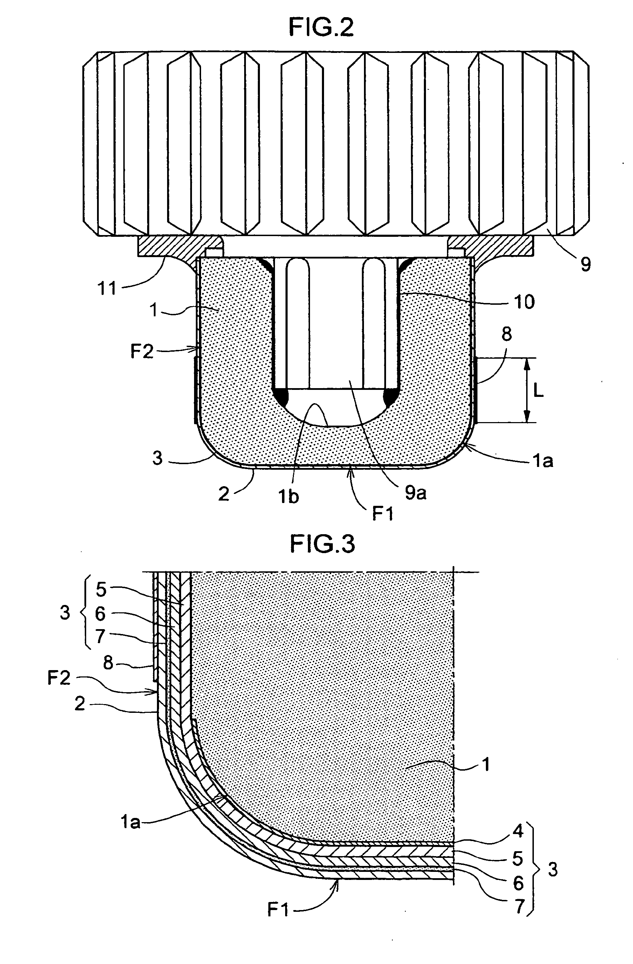

An embodiment of this invention regarding container stoppers and a manufacturing method therefor will be described with reference to the drawings. It is understood that the present invention is not to be limited to the embodiment described next or to the constructions shown in the drawings.
Container stoppers of this invention are intended for closing openings of glass or ceramic containers containing liquids including various alcoholic drinks such as whiskey and wine, and other drinks and cosmetics. A stopper for whiskey, as shown in Figs. 1 and 2, for example, includes a circular core 1 section formed of natural cork or compressed cork which is an example of elastic materials, and having a chamfer 1a at a tip portion and an inner mounting hole 1b. A liquid-contact surface F1 and an outer peripheral surface F2 continuous with the liquid-contact surface F1 of the core 1 are coated with a skin 2 of polyethylene terephthalate (PET), which is an example of polyester resins, having a thickness of about 8-20 µ m.

As the skin 2 for coating the core 1, the polyethylene terephthalate used, preferably, is an amorphous, relatively flexible polyethylene terephthalate treated against crystallization by copolymerization with a third component such as 1, 4-cyclohexane dimethanol or isophthalic acid. The skin 2 of polyethylene terephthalate is bonded all over the liquid-contact surface F1 and outer peripheral surface F2 of the core 1 through a bonding layer 3.
As shown in Fig. 3, the bonding layer 3 mainly comprises a polyethylene layer, and the polyethylene layer includes an inner-side polyethylene adhesive film 4, an outer-side polyethylene adhesive film 5 and a polyethylene film 6 arranged in order from adjacent the core 1. Further, as to the outer peripheral surface F2, this comprises a construction excluding the inner-side polyethylene adhesive film 4 from the liquid-contact surface, i.e. comprises the outer-side polyethylene adhesive film 5 and the polyethylene film 6 and an urethane adhesive 7 is interposed between the polyethylene film 6 and the skin 2 of polyethylene terephthalate.
The inner-side polyethylene adhesive film 4 and the outer-side polyethylene adhesive film 5 can be an acid-denatured polyolefin compound. Also, the polyethylene film 6 can be a low-density polyethylene, a linear low-density polyethylene or a high-density polyethylene. However, with regard to improvement of elasticity, it is preferred to employ a low-density polyethylene or a linear low-density polyethylene. Further, it is also possible to employ polyethylene having mechanical strength enhanced by metallocene catalyst.

Further, except a portion of the skin 2 of polyethylene terephthalate, i.e. a portion of the skin 2 located on the outer peripheral surface F2 of the core 1, specifically the portion on the chamfer 1a, the outer surface of the tip portion of the core 1 is coated with silicone 8 over a width indicated by "L" in Fig. 2, in order to be smoothly slidable relative to the opening of a container not shown.
The coating of silicone 8 on the skin 2 of polyethylene terephthalate may easily be formed by applying the silicone 8 after surface treatment by corona treatment or plasma treatment of the surface of the skin 2 of polyethylene terephthalate. In this case, it is more desirable to add and apply a lubricant to the silicone 8 than to apply the silicone 8 alone.
However, this silicone 8 is for improving slipperiness relative to the opening of the container, thereby to ensure smooth insertion/removal of the container stopper. Therefore, this is not absolutely needed.

If the skin of silicone 8 is to be provided, then, the lubricant to be added thereto, preferably, is one or more substances selected from fatty acid amides, polyhydric alcohol fatty acid esters and their derivatives, particulate polyethylene lubricants, or silicone particles. The fatty acid amides include, for example, oleic acid amide, erucic acid amide, behenic acid amide, stearic acid amide and so on. The polyhydric alcohol fatty acid esters and their derivatives include, for example, sorbitan monooleate, sorbitan monostearate, sorbitan trioleate and so on.
The stopper for whiskey is formed by inserting a projection 9a projecting from a glass umbrella 9 into the mounting hole 1b of the core 1, attaching the glass umbrella 9 to the upper end of the core 1 by an adhesive 10, and covering the contact portion of the upper end of the core 1 and the undersurface of the glass umbrella 9 with a washer seal 11 made of a synthetic resin.

To manufacture such a stopper for whiskey, as shown in Fig. 4, there are employed the inner-side polyethylene adhesive film 4 as a first polyethylene film corresponding to the liquid-contact surface F1, the outer-side polyethylene adhesive film 5 as a second film polyethylene film corresponding to the liquid-contact surface F1 and the outer peripheral surface F2, the polyethylene film 6 and a film 2a of polyethylene terephthalate used as the skin 2 of polyethylene terephthalate. The polyethylene film 6 is bonded to the inner surface of the film 2a of polyethylene terephthalate with the urethane adhesive 7 by a dry laminate method beforehand.
With using such films as above, first, as shown in Fig. 5, the inner-side polyethylene adhesive film 4 and the core 1 are pressed against a hot plate 12 which has a shape corresponding to the liquid-contact surface F1 of the core 1 and which also has been heated to about 130°C, thereby to bond the inner-side polyethylene adhesive film 4 to the liquid-contact surface F1 of the core 1. Then, as shown in Fig. 6, the outer-side polyethylene adhesive film 5 is bonded by thermal fusion to the liquid-contact surface F1 and outer peripheral surface F2 of the core 1.

Next, as shown in Fig. 7, the laminated film consisting of the film 2a of polyethylene terephthalate and the polyethylene film 6 is stretched, pressed down at peripheries thereof, and placed in a heated state over the core 1, and the core 1 is pressed into a die 13 of smaller diameter than the outside diameter of the core 1.
With this, the inner-side polyethylene adhesive film 4, the outer-side polyethylene adhesive film 5, the polyethylene film 6 and the polyethylene terephthalate film 2a are heat fused, whereby as shown in Fig. 3, the outer-side polyethylene adhesive film 5, and the polyethylene film 6 are integrated together to form the polyethylene bonding layer 3, and the polyethylene terephthalate film 2a is formed into the polyethylene terephthalate skin 2, with this polyethylene terephthalate film 2a being firmly bonded to the entire liquid-contact surface F1 and the outer peripheral surface 2 of the core 2.

At the same time, if there exist fine recesses unique to the cork in the liquid-contact surface F1 of the core, since the inner-side polyethylene adhesive film 4 is fused and diffused into such recesses, formation of pinholes in the polyester skin 2 in the liquid-contact surface F1 can be avoided.
Thereafter, when the core 1 is removed from the die 13, due to the resilience of the core 1, the skin 2 of polyethylene terephthalate is engaged under the stretched condition onto the core 1. Subsequently, if needed, the outer surface of the tip portion of the core 1 is coated with the silicone 8, and the glass umbrella 9 and washer seal 11 are attached to the core 1.
Although not shown, with the stopper for whiskey, the inner peripheral surface and upper surface of the mounting hole 1b may also be completely coated with the skin 2 of polyethylene terephthalate. In this case, the core 1 will be completely sealed off from the exterior to eliminate adverse influences of the core 1 on the contents.

In order to confirm the effect of the invention, various experiments were conducted. Some of the experiments will be described with reference to Fig. 8.
Examples 1-4 and Comparison Examples 1-4 shown in Fig. 8 are results of determinations on container stoppers manufactured by the invention's method with using the inner-side polyethylene adhesive film 4, the outer-side polyethylene adhesive film 5 and the laminated film consisting of the polyethylene film 6 and the polyethylene terephthalate film 2a.
In these Examples and Comparison Examples, the inner-side polyethylene adhesive film 4 and the outer-side polyethylene adhesive film 5 have thicknesses respectively shown in Fig. 8 (in the tables, inner-side PE denotes the inner-side polyethylene adhesive film and outer-side PE denotes the outer-side polyethylene adhesive film, respectively). In Comparison Example 1 and Comparison Example 4, the inner-side polyethylene adhesive film 4 was not used.

Also, in these Examples and Comparison Examples, the same laminated film consisting of the polyethylene film 6 and the polyethylene terephthalate film 2a was used. Specifically, the laminated film used consists of the polyethylene film 6 of 70 µm and the polyethylene terephthalate film 2a of 20 µm.
And, according to the above-described manufacturing method, four container stoppers were manufactured and the thickness of the polyethylene adhesive layer (shown at PE in the table), the thickness of the polyester skin (shown at PET in table) and the total thickness of PE and PET were determined. Also, by penetration tests, presence/absence of pinholes in the liquid-contact surface of the core was detected and by leak tests, presence/absence of "creases" in the outer peripheral surface F2 was detected. Observations of the outer appearances were also made.

Referring to the specific evaluation method used in the respective experiments, for the penetration tests, each sample stopper was pushed into a bottle filled with a liquid and then stored for one week at 45°C. Then, any penetration was visually evaluated. If no penetration of the liquid into the cork, a mark O was given. If penetration was found, a mark x was given.
In the leak tests, each sample stopper was pushed into a bottle filled with a liquid and then stored for one week at 45°C. Then, an amount of leak was calculated from any decrease in the weight. A mark ○ was given if the liquid leak amount was below 0.03g, whereas a mark × was given if the liquid leak amount was 0.03g or more.
Further, the appearance was visually evaluated. If the cork was clearly visible with absence of unevenness on its surface, a mark ○ was given, whereas if there was surface unevenness or the cork was not clearly visible, a mark x was given.

In the determinations of the thicknesses of PE and PET, as shown in the left-upper diagram in Fig. 8, a plurality of determinations were made at six portions denoted with A-F and an average value thereof was obtained. Incidentally, in these experiments, the thicknesses of PE and PET were determined by using a super-depth determining microscope VK8500 from KEYENCE Corporation, with 1000 times magnification of the sample section.
A is a center portion of the liquid-contact surface F1, that is, a portion of the liquid-contact surface F1, excluding the chamfer 1a, B is an interface portion between the chamfer 1a and the center portion A. C is a portion substantially at the center of the chamfer 1a. D is an interface between the chamfer 1a and the outer peripheral surface 2. E is a portion of the outer peripheral surface F2 toward the liquid-contact surface F1, that is, a portion of the outer peripheral surface F2 adjacent the chamfer 1a. F is an outer peripheral portion of the outer peripheral surface F2 away from the liquid-contact surface F1.

From these experiment results, the following facts were found.

(a) Regarding the PE thickness at the center portion A of the liquid-contact surface, in Comparison Example 1, the thickness was 69 µm and penetration due to formation of pinhole was observed. Whereas, in Example 1, the thickness was 90 µm and no penetration was observed. Therefore, it is believed that the lower limit of the PE thickness at the center portion A is about 80 µm.
   Further, in Comparison Example 2, with the PE thickness of 312 µm, there was non-transparency, so the core cork was not clearly visible, indicating deterioration of commercial value. Whereas, in Example 4, with the thickness of 281 µm, the cork was clearly visible. Therefore, it is believed that the upper limit of PE thickness at the center portion A is about 300 µm.
   From these results, the PE thickness needs to be set from 80 to 300 µ m at the center portion A of the liquid-contact surface.

(b) Regarding the PE thickness at the outer peripheral portion E of the outer peripheral surface toward the liquid-contact surface, in Comparison Example 3, with thickness of 65 µm, appearance defect due to unevenness formation was observed. Whereas, in Example 2, with thickness of 72 µm, no appearance defect was observed. Therefore, it is believed that the lower limit of the PE thickness at the outer peripheral portion E is about 70 µm.

Further, in Comparison Example 4, with thickness of 117 µm, leak due to formation of "creases" was confirmed. Whereas, in Example 4, with thickness of 96 µm, no leak was found. Therefore, it is believed that the upper limit of PE thickness at the outer peripheral portion E is about 100 µm.

From these results, the PE thickness needs to be set from 70 to 100 µm at the outer peripheral portion E of the outer peripheral surface toward the liquid-contact surface.

(c) Regarding the PE thickness over the entire liquid-contact surface, that is, the center portion A of the liquid-contact surface, the interface portion B between the center portion A and the chamfer, and the substantial center portion C of the chamber, in Comparison Example 1, with thickness of 24 µm at the interface portion B, penetration due to formation of pinhole was found. Based on this, it is understood that the PE layer thickness needs to exceed a predetermined value in the liquid-contact surface. And, considering also the size of recesses in the surface of the cork, it is needed that the PE thickness be set at 30 µm or greater over the entire surface.

(d) Regarding the relationship between the PE layer thickness at the center portion A and that at the outer peripheral portion E, in Comparison Example 1, the thickness was 69 µm at the center portion A and 74 µm at the outer peripheral portion E, the thickness at the outer peripheral portion E being greater and penetration was observed. Therefore, it is preferred that the layer thickness at the center portion A be set greater than that at the outer peripheral portion E.
   On the other hand, if the layer thickness at the center portion A is set excessively greater that that at the outer peripheral portion E, this will cause a problem in the appearance also as well as cost inefficiency
   In Example 1, the thicknesses were 90 µm and 74 µm, respectively, the layer thickness at the center portion A being 16 µm greater, and no penetration or leak was observed and there was also no appearance problem, either. Therefore, it is preferred that the PE layer thickness at the center portion A be set 10 µm or more greater than the layer thickness at the outer peripheral portion E.

Incidentally, microscope observations on the comparison examples where penetration was observed and the inner-side polyethylene adhesive film was not used reveled presence of pinholes. Referring to the pinholes PH, as shown in the diagram of Fig. 9, when there existed a fine recess unique to the cork in the surface of the cork 1, the skin 2 and the adhesive layer 3 lacking any inner-side polyethylene adhesive 4 which had been under a condition shown in (a) immediately after the molding were drawn, by a suction effect associated with cooling, into the recess 14 as shown in (b), so that a small hole was formed not only in the bonding layer 3, but also in the skin 2. On the other hand, in the case of the Examples, as shown in Fig. 10 (a) and (b), even where the recess 14 was present, since the inner-side polyethylene adhesive film 4 was fused and diffused into the recess 14, so no hole was formed at least in the skin 2. And, this difference was confirmed through the microscopic observation.

### [Other Embodiments]

(1) In the foregoing embodiment, there was described a stopper for whisky as an example of the container stopper. However, the container stopper and its manufacturing method relating to the present invention are applicable also to a stopper for closing an opening of containers made of glass or ceramics, for wine, various alcoholic or non-alcoholic drinks or various kinds of liquids such as cosmetics.
Further, in the foregoing embodiment, the core 1 is formed of natural cork or compressed cork. Apart from cork, various elastic materials having appropriate elasticity required for the core of a stopper for a container may be used, which include natural rubber, synthetic rubber, molding of wood chips, a polyester resin, and a synthetic resin having a polyester resin as a main component thereof.

(2) Regarding the polyester skin 2, an example was shown and described as being formed of polyethylene terephthalate which is one example of polyester resins. Apart from this, polybutylene terephthalate, polyester resins such as thermoplastic polyester elastomer, and various synthetic resins having polyester resins as main components thereof, may be used.
   Further, in manufacturing the container stopper, in the foregoing embodiment the polyethylene film comprised the two films of the inner-side first film 4 and the outer-side second film 5, with the second film 5 being bonded after bonding of the first film 4. Instead, the film can be formed simultaneously by placing the first film 4 on the second film 5 and bonding them together. Further, the film can be manufactured by using a single film having a greater thickness at the portion corresponding to the liquid-contact surface F1 than the portion thereof corresponding to the outer peripheral surface F2.

### [Industrial Utility]

The container stoppers and the manufacturing method therefor according to this invention are applicable as container stoppers for closing openings of glass or ceramic containers containing various alcoholic drinks such as whiskey and wine, various non-alcoholic drinks, and various liquids such as cosmetics, and as methods of manufacturing the container stoppers.

### [Description of Reference Signs]

1 core
2 polyester skin
2a polyester film
3 bounding layer
4 first polyethylene films
5 second first polyethylene films
A middle portion of a liquid-contact surface
E portion of the outer peripheral surface toward the liquid-contact surface
F1 liquid-contact surface
F2 outer peripheral surface

## Claims

1. A container stopper comprising a core (1) formed of an elastic material and having a liquid-contact surface (F1) and an outer peripheral surface (F2) continuous with the liquid-contact surface (F1), the liquid-contact surface (F1) and the outer peripheral surface (F2) being coated with a polyester skin (2) made of a polyester resin or a synthetic resin having a polyester resin as a main component thereof, and the polyester skin is bonded to the liquid-contact surface (F1) and the outer peripheral surface (F2) of said core (1) through a polyethylene bonding layer (3) formed of a polyethylene resin or having a polyethylene resin as a main component thereof
**characterized in that**
said polyethylene bonding layer (3) has a thickness of 80 µm to 300 µm at a center portion of the liquid-contact surface (F1), a thickness of 70 µm to 100 µm at an outer peripheral portion of the outer peripheral surface (F2) adjacent the liquid-contact surface (F1) and a thickness of 30 µm to 300 µm over the entire liquid-contact surface (F1).

2. The container stopper according to claim 1,
**characterized in that**
the thickness of said polyethylene bonding layer (3) at the center portion of the liquid-contact surface layer (F1) is 10 µm or more greater than the thickness of the polyethylene bonding layer (3) at the outer peripheral portion.

3. The container stopper according to claim 1,
**characterized in that**
the polyethylene bonding layer (3) at the liquid-contact surface (F1) comprises two layers and the polyethylene bonding layer (3) at the outer peripheral surface (F2) comprises one layer.

4. The container stopper according to claim 1,
**characterized in that**
said polyester skin (2) is a skin made of polyethylene terephthalate.

5. A method of manufacturing a container stopper comprising a core (1) formed of an elastic material and having a liquid-contact surface (F1) and an outer peripheral surface (F2) continuous with the liquid-contact surface (F1), the liquid-contact surface (F1) and the outer peripheral surface (F2) being coated with a skin (2) made of a polyester resin or a synthetic resin having a polyester resin as a main component thereof
**characterized in that**
a polyester film is used as said skin (2), the polyester film is stretched, and said core (1) is press-fit in a heated state for extension, the polyester film and the liquid-contact surface (F1) and the outer peripheral surface (F2) of said core (1) being bonded through a polyethylene bonding layer (3) of a polyethylene resin or having a polyethylene resin as a main component thereof, which bonding layer (3) has a thickness of 80 µm to 300 µm at a portion thereof corresponding to the center portion of the liquid-contact surface (F1), a thickness of 70 µm to 100 µm at an outer peripheral portion of the outer peripheral surface and a thickness of 30 µm to 300 µm over the entire liquid contact surface (F1).

6. The method according to claim 5,
**characterized in that**
a polyester skin having a skin-side polyethylene adhesion forming layer (6) bonded to an inner surface thereof is used as said skin (2), and a core having a core-side polyethylene adhesion forming layer (4, 5) bonded to the liquid-contact surface (F1) and the outer peripheral surface (F2) thereof is used as said core (1), said skin-side and core-side polyethylene adhesion forming layers being integrated by thermal fusion to form said polyethylene bonding layer (3).

7. The method according to claim 6,
**characterized in that**
the core-side polyethylene adhesion forming layer (4, 5) comprises at least two films including a first film (4) corresponding to the liquid-contact surface (F1) and a second film(5) corresponding to the liquid-contact surface (F1) and the outer peripheral surface (F2).

8. The method according to claim 7,
**characterized in that**
after the first film (4) is bonded to the liquid-contact surface (F1) of the core (1), the second film (5) is bonded to the liquid-contact surface (F1) and the outer peripheral surface (F2) of the core (1), thereby to form the core-side polyethylene adhesion forming layer (4, 5).

9. The method according to claim 6,
**characterized in that**
the polyethylene skin-side adhesion forming layer (6) bonded to an inner surface thereof by a dry laminate method is used as said skin (2).

## Patentansprüche

1. Behälterverschluss, umfassend einen Kern (1), der aus einem elastischen Material besteht und eine flüssigkeitsberührende Oberfläche (F1) sowie eine in die flüssigkeitsberührende Oberfläche (F1) übergehende äußere Umfangsfläche (F2) aufweist, wobei die flüssigkeitsberührende Oberfläche (F1) und die äußere Umfangsfläche (F2) mit einer Polyester-Außenhaut (2) beschichtet sind, die aus Polyesterharz oder einem synthetischen Harz mit
einem Polyesterharz als Hauptbestandteil besteht, wobei die Polyester-Außenhaut mittels einer aus einem Polyethylenharz bestehenden oder ein Polyethylenharz als Hauptbestandteil aufweisenden Polyethylen-Haftschicht (3) mit der flüssigkeitsberührenden Oberfläche (F1) und der äußeren Umfangsfläche (F2) des Kerns (1) verbunden ist,
**dadurch gekennzeichnet,**
**dass** die Polyethylen- Haftschicht (3) in einem mittigen Bereich der flüssigkeitsberührenden Oberfläche (F1) eine Dicke von 80 µm bis 300 µm, in einem äußeren Umfangsbereich der an die flüssigkeitsberührende Oberfläche (F1) angrenzenden äußeren Umfangsfläche (F2) eine Dicke von 70 µm bis 100 µm und auf der restlichen flüssigkeitsberührenden Oberfläche (F1) eine Dicke von 30 µm bis 300 µm aufweist.

2. Behälterverschluss nach Anspruch 1,
**dadurch gekennzeichnet,**
**dass** die Dicke der Polyethylen-Haftschicht (3) im mittigen Bereich der flüssigkeitsberührenden Oberfläche (F1) um 10 µm oder mehr dicker als die Dicke der Polyethylen-Haftschicht (3) im äußeren Umfangsbereich ist.

3. Behälterverschluss nach Anspruch 1,
**dadurch gekennzeichnet,**
**dass** die Polyethylen-Haftschicht (3) auf der flüssigkeitsberührenden Oberfläche (F1) zwei Schichten umfasst, und dass die Polyethylen-Haftschicht (3) auf der äußeren Umfangsfläche (F2) eine einzige Schicht umfasst.

4. Behälterverschluss nach Anspruch 1,
**dadurch gekennzeichnet,**
**dass** die Polyester-Außenhaut (2) eine Außenhaut aus PolyethylenTerephthalat ist.

5. Verfahren zum Herstellen eines Behälterverschlusses, umfassend einen Kern (1), der aus einem elastischen Material besteht und eine flüssigkeitsberührende Oberfläche (F1) sowie eine in die flüssigkeitsberührende Oberfläche (F1) übergehende äußere Umfangsfläche (F2) aufweist, wobei die flüssigkeitsberührende Oberfläche (F1) und die äußere Umfangsfläche (F2) mit einer Außenhaut (2) aus Polyesterharz oder aus einem synthetischen Harz mit einem Polyesterharz als Hauptbestandteil beschichtet sind,
**dadurch gekennzeichnet,**
**dass** als Außenhaut (2) eine Polyesterfolie verwendet wird, dass die Polyesterfolie gedehnt wird, und dass der Kern (1) in einem zur Ausdehnung führenden erwärmten Zustand aufgepresst wird, wobei die Polyesterfolie und die flüssigkeitsberührende Oberfläche (F1) und die äußere Umfangsfläche (F2) des Kerns (1) mittels einer Polyethylen-Haftschicht (3) aus einem Polyethylenharz oder mit einem Polyethylenharz als Hauptbestandteil miteinander verbunden werden, wobei die Haftschicht (3) in einem Bereich, der mit dem mittigen Bereich der flüssigkeitsberührenden Oberfläche (F1) korrespondiert, eine Dicke von 80 µm bis 300 µm aufweist, in einem äußeren Umfangsbereich der äußeren Umfangsfläche eine Dicke von 70 µm bis 100 µm aufweist, und über die restliche flüssigkeitsberührende Oberfläche (F1) hinweg eine Dicke von 30 µm bis 300 µm aufweist.

6. Verfahren nach Anspruch 5,
**dadurch gekennzeichnet,**
**dass** als Außenhaut (2) eine Polyester-Außenhaut mit einer an deren Innenseite anhaftenden, außenhautseitigen Polyethylen-Kleberschicht (6) verwendet wird, und dass ein Kern mit einer kernseitigen Polyethylen-Kleberschicht (4, 5), die an der flüssigkeitsberührenden Oberfläche (F1) und der äußeren Umfangsfläche (F2) anhaftet, als Kern (1) verwendet wird, wobei die außenhautseitigen und kernseitigen Polyethylen-Kleberschichten mittels thermischer Verschmelzung miteinander verbunden werden, um die Polyethylen-Kleberschicht (3) zu bilden.

7. Verfahren nach Anspruch 6,
**dadurch gekennzeichnet,**
**dass** die kernseitige Polyethylen-Kleberschicht (4, 5) mindestens zwei Folien umfasst, enthaltend eine erste Folie (4), die mit der flüssigkeitsberührenden Oberfläche (F1) korrespondiert sowie eine zweite Folie (5), die mit der flüssigkeitsberührenden Oberfläche (F1) und der äußeren Umfangsfläche (F2) korresondiert.

8. Verfahren nach Anspruch 7,
**dadurch gekennzeichnet,**
**dass** nachdem die erste Folie (4) mit der flüssigkeitsberührenden Oberfläche (F1) des Kerns (1) verbunden worden ist, die zweite Folie (5) mit der flüssigkeitsberührenden Oberfläche (F1) und der äußeren Umfangsfläche (F2) des Kerns (1) verbunden wird, um hierdurch die kernseitige Polyethylen-Kleberschicht (4, 5) zu bilden.

9. Verfahren nach Anspruch 6,
**dadurch gekennzeichnet,**
**dass** die außenhautseitige Polyethylen-Kleberschicht (6), die mittels eines Trockenlaminierverfahrens mit einer Innenfläche der Polyester-Außenhaut verbunden ist, als Außenhaut (2) verwendet wird.

## Revendications

1. Bouchon de récipient comprenant une partie centrale (1) constituée d'une matière élastique et présentant une surface de contact avec un liquide (F1) et une surface périphérique extérieure (F2) contigüe à la surface de contact avec un liquide (F1), la surface de contact avec un liquide (F1) et la surface périphérique extérieure (F2) étant revêtues d'une peau de polyester (2) constituée d'une résine de polyester ou d'une résine synthétique comportant une résine de polyester en tant que composant principal de celle-ci, et la peau de polyester est liée à la surface de contact avec un liquide (F1) et à la surface périphérique extérieure (F2) de ladite partie centrale (1) par l'intermédiaire d'une couche de liaison de polyéthylène (3) constituée d'une résine de polyéthylène ou comportant une résine de polyéthylène en tant que composant principal de celle-ci,
**caractérisé en ce que**
ladite couche de liaison de polyéthylène (3) présente une épaisseur comprise entre 80 µm et 300 µm au niveau d'une partie centrale de la surface de contact avec un liquide (F1), une épaisseur comprise entre 70 µm et 100 µm au niveau d'une partie périphérique extérieure de la surface périphérique extérieure (F2) adjacente à la surface de contact avec un liquide (F1) et une épaisseur comprise entre 30 µm et 300 µm sur la totalité de la surface de contact avec un liquide (F1).

2. Bouchon de récipient selon la revendication 1,
**caractérisé en ce que**
l'épaisseur de ladite couche de liaison dé polyéthylène (3) au niveau de la partie centrale de la couche de surface de contact avec un liquide (F1) est supérieure de 10 µm ou plus à l'épaisseur de la couche de liaison de polyéthylène (3) au niveau de la partie périphérique extérieure.

3. Bouchon de récipient selon la revendication 1,
**caractérisé en ce que**
la couche de liaison de polyéthylène (3) au niveau de la surface de contact avec un liquide (F1) comprend deux couches et la couche de liaison de polyéthylène (3) au niveau de la surface périphérique extérieure (F2) comprend une seule couche.

4. Bouchon de récipient selon la revendication 1,
**caractérisé en ce que**
ladite peau de polyester (2) est une peau constituée d'un poly(téréphtalate d'éthylène).

5. Procédé de fabrication d'un bouchon de récipient comprenant une partie centrale (1) constituée d'une matière élastique et présentant une surface de contact avec un liquide (F1) et une surface périphérique extérieure (F2) contigüe à la surface de contact avec un liquide (F1), la surface de contact avec un liquide (F1) et la surface périphérique extérieure (F2) étant revêtues d'une peau (2) constituée d'une résine de polyester ou d'une résine synthétique comportant une résine de polyester en tant que composant principal de celle-ci,
**caractérisé en ce que**
un film de polyester est utilisé en tant que dite peau (2), le film de polyester est étiré, et ladite partie centrale (1) est ajustée de façon serrée dans un état chauffé pour une extension, le film de polyester et la surface de contact avec un liquide (F1) et la surface périphérique extérieure (F2) de ladite partie centrale (1) étant liés par l'intermédiaire d'une couche de liaison de polyéthylène (3) constituée d'une résine de polyéthylène ou comportant une résine de polyéthylène en tant que composant principal de celle-ci, laquelle couche de liaison (3) présente une épaisseur comprise entre 80 µm et 300 µm au niveau d'une partie de celle-ci correspondant à la partie centrale de la surface de contact avec un liquide (F1), une épaisseur comprise entre 70 µm et 100 µm au niveau d'une partie périphérique extérieure de la surface périphérique extérieure et une épaisseur comprise entre 30 µm et 300 µm sur la totalité de la surface de contact avec un liquide (F1).

6. Procédé selon la revendication 5,
**caractérisé en ce que**
une peau de polyester comportant une couche de formation d'adhérence de polyéthylène du côté peau (6) liée à une surface intérieure de celle-ci est utilisée en tant que dite peau (2), et une partie centrale comportant une couche de formation d'adhérence de polyéthylène côté partie centrale (4, 5) liée à la surface de contact avec un liquide (F1) et à la surface périphérique extérieure (F2) de celle-ci est utilisée en tant que dite partie centrale (1), lesdites couches de formation d'adhérence de polyéthylène côté peau et côté partie centrale étant intégrées par fusion thermique pour former ladite couche de liaison de polyéthylène (3).

7. Procédé selon la revendication 6,
**caractérisé en ce que**
la couche de formation d'adhérence de polyéthylène côté partie centrale (4, 5) comprend au moins deux films incluant un premier film (4) correspondant à la surface de contact avec un liquide (F1) et un deuxième film (5) correspondant à la surface de contact avec un liquide (F1) et à la surface périphérique extérieure (F2).

8. Procédé selon la revendication 7,
**caractérisé en ce que**
après que le premier film (4) est lié à la surface de contact avec un liquide (F1) de la partie centrale (1), le deuxième film (5) est lié à la surface de contact avec un liquide (F1) et à la surface périphérique extérieure (F2) de la partie centrale (1), ce qui permet de former la couche de formation d'adhérence de polyéthylène côté partie centrale (4, 5).

9. Procédé selon la revendication 6,
**caractérisé en ce que**
la couche de formation d'adhérence côté peau de polyéthylène (6) liée à une surface intérieure de celle-ci par le biais d'un procédé de stratification à sec est utilisée en tant que dite peau (2).
